# EUROPEAN PATENT APPLICATION

(11) **EP 4 625 749 A1**
(43) Date of publication of application: **01.10.2025**
(21) Application number: 23893981.3
(22) Date of filing: 23.11.2023
(51) Int. Cl.: H02J 7/00

(54) **ENERGY PROCESSING APPARATUS AND VEHICLE**

(30) Priority: 25.11.2022 CN 202211493478
(71) Applicant: BYD Company Limited, Shenzhen, Guangdong 518118 (CN)
(72) Inventor: YAN, Lei, Shenzhen, Guangdong 518118 (CN); QIU, Guowei, Shenzhen, Guangdong 518118 (CN); GAO, Wen, Shenzhen, Guangdong 518118 (CN); LIU, Chuncheng, Shenzhen, Guangdong 518118 (CN)
(74) Representative: Mathys & Squire
(86) International application number: PCT/CN2023/133742
(87) International publication number: WO 2024/109892

(57) **Abstract**

An energy processing apparatus and a vehicle. The apparatus comprises a first battery, a second battery, at least one phase of first bridge arm, at least one phase of first inductor, and a controller, wherein a positive electrode of the second battery is connected to a first end of each phase of first bridge arm, and a negative electrode of the second battery is respectively connected to a second end of each phase of first bridge arm and a negative electrode of the first battery; a first end of each phase of first inductor is connected to the midpoint of the corresponding first bridge arm, and a second end of each phase of first inductor is connected to a positive electrode of the first battery; and the controller is connected to each phase of first bridge arm, and is used for controlling the first bridge arm in a first preset state, such that the first battery and the second battery alternately charge and discharge to realize self-heating of the first battery and the second battery.

## Description

### CROSS-REFERENCE TO RELATED APPLICATIONS

The present disclosure claims priority to Chinese Patent Application No. 202211493478.3, titled "ENERGY PROCESSING APPARATUS AND VEHICLE" and filed on November 25, 2022. The entire content of the above-referenced application is incorporated herein by reference.

### FIELD

The present disclosure relates to the technical field of vehicles, and specifically, to an energy processing apparatus and a vehicle.

### BACKGROUND

At present, with the rapid development of electric vehicles, their application scenarios are becoming more and more increasingly widespread, requiring power batteries to adapt to various temperature change scenarios. However, the performance of the power batteries installed in the electric vehicles deteriorates significantly during charging and discharging in low-temperature environments, thus limiting the ability of the driving system or charging system in low-temperature environments and seriously degrading the user experience.

In order to reduce the limitations of low-temperature environments on power batteries, some heating solutions for power batteries have been proposed. At present, heating the power battery is mainly achieved through an external heater, but the high-voltage system of the whole vehicle requires additional power distribution to the external heater, and water or air ducts, pipelines, low-voltage system and the like are also required, resulting in an increase in the total cost of the whole vehicle. In addition, since water ducts and pipelines are generally long, heat transmission losses are great, resulting in low heating efficiency of the battery.

### SUMMARY

In order to overcome the problems existing in the related arts, the present disclosure provides an energy processing apparatus and a vehicle.

In order to achieve the above purpose, according to a first aspect, the present disclosure provides an energy processing apparatus, which includes: a first battery, a second battery, at least one phase of first bridge arm, at least one phase of first inductor, and a controller. A positive electrode of the second battery is connected to a first end of each phase of first bridge arm. A negative electrode of the second battery is separately connected to a second end of each phase of first bridge arm and a negative electrode of the first battery. A first end of each phase of first inductor is connected to a midpoint of the corresponding first bridge arm. A second end of each phase of first inductor is connected to a positive electrode of the first battery. The controller is connected to each phase of first bridge arm. The controller is configured to: control the first bridge arm in a first preset state, to cause the first battery and the second battery to alternately charge and discharge to achieve self-heating of the first battery and the second battery.

In an embodiment, the controller is configured to: control the first bridge arm in a first half cycle of a control cycle, to cause the first battery to discharge and the second battery to charge; and control the first bridge arm in a second half cycle of the control cycle, to cause the first battery to charge and the second battery to discharge.

In an embodiment, the controller is configured to: control a lower switch group of the at least one phase of first bridge arm to be on and an upper switch group of the at least one phase of first bridge arm to be off in a first time period of the first half cycle, to cause the first battery to discharge and the first inductor to store energy; and control the upper switch group of the at least one phase of first bridge arm to be on and the lower switch group of the at least one phase of first bridge arm to be off in a second time period of the first half cycle, to cause the first battery to discharge, the first inductor to release the stored energy, and the second battery to charge.

In an embodiment, the controller is configured to: control an upper switch group of the at least one phase of first bridge arm to be on and a lower switch group of the at least one phase of first bridge arm to be off in a first time period of the second half cycle, to cause the first battery to charge, the second battery to discharge, and the first inductor to store energy; and control the lower switch group of the at least one phase of first bridge arm to be on and the upper switch group of the at least one phase of first bridge arm to be off in a second time period of the second half cycle, to cause the first battery to charge and the first inductor to release the stored energy.

In an embodiment, a bridge arm of a motor controller is reused as the first bridge arm and a coil of a motor is reused as the first inductor.

In an embodiment, the apparatus further includes an energy transmission circuit arranged between the first battery and the second battery. The energy transmission circuit is connected to the controller. The energy transmission circuit is configured to achieve energy transmission between the first battery and the second battery.

In an embodiment, the energy transmission circuit includes: at least one phase of second bridge arm, a first end of each phase of second bridge arm being connected to the positive electrode of the second battery, and a second end of each phase of second bridge arm being separately connected to the negative electrode of the second battery and the negative electrode of the first battery; and at least one phase of second inductor, a first end of each phase of second inductor being connected to a midpoint of the corresponding second bridge arm, and a second end of each phase of second inductor being connected to the positive electrode of the first battery. The controller is connected to each phase of second bridge arm. The controller is further configured to: control the second bridge arm in a second preset state, to cause the first battery and the second battery to alternately charge and discharge to achieve self-heating of the first battery and the second battery.

In an embodiment, the controller is configured to: control the second bridge arm in a first half cycle of a control cycle, to cause the first battery to discharge and the second battery to charge; and control the second bridge arm in a second half cycle of the control cycle, to cause the first battery to charge and the second battery to discharge.

In an embodiment, the energy transmission circuit includes: at least one phase of second bridge arm, a first end of each phase of second bridge arm being connected to the positive electrode of the first battery, and a second end of each phase of second bridge arm being separately connected to the negative electrode of the first battery and the negative electrode of the second battery; and at least one phase of second inductor, a first end of each phase of second inductor being connected to a midpoint of the corresponding second bridge arm, and a second end of each phase of second inductor being connected to the positive electrode of the second battery. The controller is connected to each phase of second bridge arm. The controller is further configured to: control the second bridge arm in a second preset state, to cause the first battery and the second battery to alternately charge and discharge to achieve self-heating of the first battery and the second battery.

In an embodiment, the controller is configured to: control the second bridge arm in a first half cycle of a control cycle, to cause the first battery to charge and the second battery to discharge; and control the second bridge arm in a second half cycle of the control cycle, to cause the first battery to discharge and the second battery to charge.

In an embodiment, the controller is configured to: control the second bridge arm in a first half cycle of a control cycle, to cause the first battery to discharge and the second battery to charge; and control the second bridge arm in a second half cycle of the control cycle, to cause the first battery to charge and the second battery to discharge.

In an embodiment, the apparatus further includes: a DC charging port; a switching circuit, a first end of the switching circuit being connected to a positive electrode of the DC charging port, and a second end of the switching circuit being selectively connected to the positive electrode of the first battery and the positive electrode of the second battery; and a switching device, a first end of the switching device being connected to each phase of first inductor, and a second end of the switching device being connected to the positive electrode of the first battery.

In an embodiment, the controller is separately connected to the switching circuit and the switching device. The controller is further configured to: in a first mode, control the switching circuit to be connected to the positive electrode of the first battery and control the switching device to be off to charge the first battery, and control the second bridge arm to supply power to the second battery.

In an embodiment, the controller is separately connected to the switching circuit and the switching device. The controller is further configured to: in a second mode, control the switching circuit to be connected to the positive electrode of the second battery and control the switching device to be off to charge the second battery, and control the second bridge arm to supply power to the first battery.

In an embodiment, the apparatus further includes:
a switching device. A first end of the switching device is connected to each phase of first inductor. A second end of the switching device is connected to the positive electrode of the first battery.

In an embodiment, the first battery is an energy type battery. The second battery is a power type battery. The charging and discharging rate of the power type battery is greater than the charging and discharging rate of the energy type battery.

In an embodiment, the controller is further configured to: control a motor controller to store braking feedback energy in the second battery; and/or, control the motor controller and the second bridge arm to store braking feedback energy in the first battery.

According to a second aspect, the present disclosure provides a vehicle, which includes: the energy processing apparatus according to the first aspect of the present disclosure.

In the above technical solution, the energy processing apparatus includes a first battery, a second battery, at least one phase of first bridge arm, at least one phase of first inductor, and a controller. A positive electrode of the second battery is connected to a first end of each phase of first bridge arm. A negative electrode of the second battery is separately connected to a second end of each phase of first bridge arm and a negative electrode of the first battery. A first end of each phase of first inductor is connected to a midpoint of the corresponding first bridge arm. A second end of each phase of first inductor is connected to a positive electrode of the first battery. The controller is connected to each phase of first bridge arm. The controller is configured to: control the first bridge arm in a first preset state, to cause the first battery and the second battery to alternately charge and discharge to achieve self-heating of the first battery and the second battery. In this way, the first battery and the second battery can alternately charge and discharge by controlling the first bridge arm in the first preset state, thus achieving self-heating of the first battery and the second battery to better maintain battery temperature, improve electrolyte activity and electrochemical reaction rate of lithium-ion batteries, and ensure the driving capability of the electric vehicle driving system. Moreover, the battery self-heating energy loss is low, the heat is uniformly transferred, and the heating efficiency is high. In addition, the first battery and the second battery can cooperate in a redundant configuration, so that even if one of the batteries fails, not all the loads on the vehicle stop working, thus improving the power supply stability of the vehicle.

Other features and advantages of the present disclosure will be described in detail in the following detailed description part.

### BRIEF DESCRIPTION OF THE DRAWINGS

The accompanying drawings are intended to provide further understanding of the present disclosure and constitute a part of this specification. The accompanying drawings and the specific implementations below are used together for explaining the present disclosure rather than constituting a limitation to the present disclosure. In the accompanying drawings:
FIG. 1 is a block diagram of an energy processing apparatus according to an exemplary embodiment;
FIG. 2 is a circuit topology diagram of an energy processing apparatus according to an exemplary embodiment;
FIG. 3A to FIG. 3D are working principle diagrams of achieving self-heating of a first battery and a second battery by using the energy processing apparatus in FIG. 2 in a first preset state according to an exemplary embodiment;
FIG. 4 is a block diagram of an energy processing apparatus according to another exemplary embodiment;
FIG. 5A is a circuit topology diagram of an energy processing apparatus according to another exemplary embodiment.
FIG. 5B is a circuit topology diagram of an energy processing apparatus according to another exemplary embodiment;
FIG. 6A to FIG. 6D are working principle diagrams of achieving self-heating of a first battery and a second battery by using the energy processing apparatus in FIG. 5Ain a second preset state according to an exemplary embodiment;
FIG. 7A to FIG. 7D are working principle diagrams of achieving self-heating of a first battery and a second battery by using the energy processing apparatus in FIG. 5B in a second preset state according to an exemplary embodiment;
FIG. 8 is a block diagram of an energy processing apparatus according to another exemplary embodiment;
FIG. 9 is a circuit topology diagram of an energy processing apparatus according to another exemplary embodiment;
FIG. 10A is a working principle diagram of supplying power directly to a high-voltage load by using a second battery in the energy processing apparatus in FIG. 9 in a third preset state according to an exemplary embodiment;
FIG. 10B is a working principle diagram of charging a first battery by using a second battery in the energy processing apparatus in FIG. 9 in a third preset state according to an exemplary embodiment;
FIG. 11A is a working principle diagram of supplying power to a high-voltage load through an energy transmission circuit by using a first battery in the energy processing apparatus in FIG. 9 in a fourth preset state according to an exemplary embodiment;
FIG. 11B is a working principle diagram of charging a second battery through an energy transmission circuit by using a first battery in the energy processing apparatus in FIG. 9 in a fourth preset state according to an exemplary embodiment;
FIG. 12A is a working principle diagram of feeding back braking energy to a second battery by using the energy processing apparatus in FIG. 9 in a sixth preset state according to an exemplary embodiment;
FIG. 12B is a working principle diagram of feeding back braking energy to a first battery by using the energy processing apparatus in FIG. 9 in a sixth preset state according to an exemplary embodiment;
FIG. 13A is a circuit topology diagram of an energy processing apparatus according to another exemplary embodiment;
FIG. 13B is a circuit topology diagram of an energy processing apparatus according to another exemplary embodiment;
FIG. 14A to FIG. 14C are working principle diagrams of charging a first battery and simultaneously supplying power to a second battery through a second bridge arm by using the energy processing apparatus in FIG. 13A in a first mode according to an exemplary embodiment;
FIG. 15A to FIG. 15B are working principle diagrams of charging a first battery and simultaneously supplying power to a second battery through a second bridge arm by using the energy processing apparatus in FIG. 13B in a first mode according to an exemplary embodiment;
FIG. 16A to FIG. 16B are working principle diagrams of charging a second battery and simultaneously supplying power to a first battery through a second bridge arm by using the energy processing apparatus in FIG. 13A in a second mode according to an exemplary embodiment; and
FIG. 17A to FIG. 17C are working principle diagrams of charging a second battery and simultaneously supplying power to a first battery through a second bridge arm by using the energy processing apparatus in FIG. 13B in a second mode according to an exemplary embodiment.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

It is to be understood that each of actions to acquire signals, information or data in the present disclosure are performed in accordance with the relevant data protection regulations and policies of the country where they are located, and with the authorization granted by the corresponding apparatus owner.

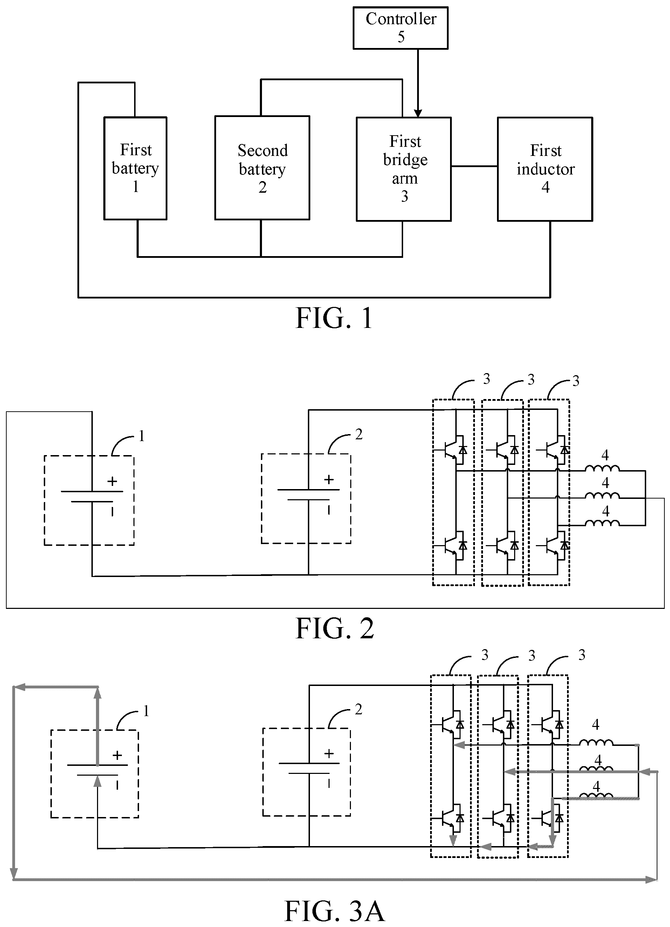

The present disclosure provides an energy processing apparatus. Referring to FIG. 1, the energy processing apparatus may include: a first battery 1, a second battery 2, at least one phase of first bridge arm 3, at least one phase of first inductor 4, and a controller 5. The number of the first bridge arms 3 is the same as the number of the first inductors 4.

A positive electrode of the second battery 2 is connected to a first end of each phase of first bridge arm 3. A negative electrode of the second battery 2 is separately connected to a second end of each phase of first bridge arm 3 and a negative electrode of the first battery 1. A first end of each phase of first inductor 4 is connected to a midpoint of the corresponding first bridge arm 3. A second end of each phase of first inductor 4 is connected to a positive electrode of the first battery 1. The controller 5 is connected to each phase of first bridge arm 3 and configured to control the first bridge arm 3 in a first preset state, to cause the first battery 1 and the second battery 2 to alternately charge and discharge (for examples, cyclically charge and discharge) to achieve self-heating of the first battery 1 and the second battery 2, that is, achieve the self-heating of the first battery 1 and the second battery 2 through the first bridge arm 3.

In the present disclosure, the first preset state is a state that the self-heating of the first battery 1 and the second battery 2 is achieved through the first bridge arm 3. Cyclic charging and discharging above refer to switching charging and discharging multiple times at a certain frequency. Through the cyclic charging and discharging of the first battery 1 and the second battery 2, the first battery 1 and the second battery 2 can generate heat, thus achieving the self-heating of the first battery 1 and the second battery 2.

It is to be understood that although FIG. 1 provides illustration by taking the energy processing apparatus including one phase of first bridge arm 3 and a first inductor 4 as an example, those skilled in the art may understand that the number of bridge arms and the number of inductors in FIG. 1 are only exemplary.

In the above technical solution, the energy processing apparatus includes a first battery, a second battery, at least one phase of first bridge arm, at least one phase of first inductor, and a controller. A positive electrode of the second battery is connected to a first end of each phase of first bridge arm. A negative electrode of the second battery is separately connected to a second end of each phase of first bridge arm and a negative electrode of the first battery. A first end of each phase of first inductor is connected to a midpoint of the corresponding first bridge arm. A second end of each phase of first inductor is connected to a positive electrode of the first battery. The controller is connected to each phase of first bridge arm. The controller is configured to: control the first bridge arm in a first preset state, to cause the first battery and the second battery to alternately charge and discharge to achieve self-heating of the first battery and the second battery. In this way, the first battery and the second battery can alternately charge and discharge by controlling the first bridge arm in the first preset state, thus achieving self-heating of the first battery and the second battery to better maintain battery temperature, improve electrolyte activity and electrochemical reaction rate of lithium-ion batteries, and ensure the driving capability of the electric vehicle driving system. Moreover, the battery self-heating energy loss is low, the heat is uniformly transferred, and the heating efficiency is high. In addition, the first battery and the second battery can cooperate in a redundant configuration, so that even if one of the batteries fails, not all the loads on the vehicle stop working, thus improving the power supply stability of the vehicle.

In addition, the types of the first battery 1 and the second battery 2 described above may be the same. For example, both are energy type batteries or both are power type batteries. Energy type batteries have a relatively large storage capacity and can therefore store a considerable amount of energy. Power type batteries have a high power density and can provide strong power output instantly, that is, they can release a large amount of current instantly. Moreover, the charging and discharging rate of power type batteries is greater than the charging and discharging rate of energy type batteries.

Certainly, the types of the first battery 1 and the second battery 2 may also be different, that is, the first battery 1 is one of an energy type battery and a power type battery, and the second battery 2 is the other of the energy type battery and the power type battery. In this way, the advantages of both the power type battery and the energy type battery can be utilized simultaneously, thus not only meeting the instantaneous high-power electricity demand of the load to ensure the power performance of the vehicle, and but also achieving an ultra-long mile range.

Exemplarily, the first battery 1 is an energy type battery, and the second battery 2 is a power type battery.

Further exemplarily, the first battery 1 is a power type battery, and the second battery 2 is an energy type battery.

Referring to FIG. 2, the energy processing apparatus includes N phases of first bridge arms 3 and N phases of first inductors 4, where N≥1.

The positive electrode of the second battery 2 is connected to a first bus terminal of the N phases of first bridge arms 3. The negative electrode of the second battery 2 is separately connected to a second bus terminal of the N phases of first bridge arms 3 and the negative electrode of the first battery 1. First ends of the N phases of first inductors 4 are correspondingly connected to midpoints of the N phases of first bridge arms 3 one to one. Second ends of the N phases of first inductors 4 are jointly connected to form a neutral point. The neutral point is connected to the positive electrode of the first battery 1.

In this case, the controller 5 (not shown in FIG. 2) is configured to control at least one phase of first bridge arm 3 in a first preset state, to cause the first battery 1 and the second battery 2 to alternately charge and discharge to achieve self-heating of the first battery 1 and the second battery 2. A first target inductor is an inductor of the N phases of first inductors 4 that is connected to the at least one phase of first bridge arm 3.

In an embodiment, the controller 5 is configured to control the N phases of first bridge arms 3 in a first preset state, to cause the first battery 1 and the second battery 2 to alternately charge and discharge to achieve self-heating of the first battery 1 and the second battery 2. In this way, the N phases of first bridge arms 3 and the N phases of first inductors 4 work simultaneously, thus maximizing the heating power and improving the self-heating effect of the first battery and the second battery.

In an embodiment, the N phases of first inductors 4 are motor coils (for example, coils of a driving motor), and the N phases of first bridge arms 3 are a motor controller. That is, the bridge arm of the motor controller is reused as the first bridge arm 3 and the coil of the motor is reused as the first inductor 4. In this way, the existing motor coils and motor controller on the vehicle are reused, thus achieving different functions according to the needs. For example, when the first battery 1 and the second battery 2 need to be self-heated, the N phases of first inductors 4 and the N phases of first bridge arms 3 can be applied to various self-heating processes described in the present disclosure; and when the vehicle needs to be driven, the N phases of first inductors 4 and the N phases of first bridge arms 3 can be switched to enable the motor corresponding to the N phases of first inductors 4 to output power by controlling the first bridge arms 3, thus driving the vehicle. Certainly, self-heating and vehicle driving may also be achieved synchronously through the N phases of first inductors 4 and the N phases of first bridge arms 3. In this way, different functions can be achieved according to the needs by reusing the vehicle motor coils and motor controller, and the vehicle cost can be reduced.

It is to be understood that although FIG. 2 provides illustration by taking N=3 as an example, those skilled in the art may understand that the number of bridge arms and the number of inductors in FIG. 2 are only exemplary.

Below is a detailed description of the specific implementation of controlling the first bridge arm 3 in the first preset state, to cause the first battery 1 and the second battery 2 to alternately charge and discharge.

In an implementation, the controller 5 is configured to: control the first bridge arm 3 in a first half cycle of a control cycle, to cause the first battery 1 to discharge and the second battery 2 to charge; and control the first bridge arm 3 in a second half cycle of the control cycle, to cause the first battery 1 to charge and the second battery 2 to discharge.

Specifically, it is configured to control a lower switch group of the at least one phase of first bridge arm 3 to be on and an upper switch group of the at least one phase of first bridge arm 3 to be off in a first time period of the first half cycle, to cause the first battery 1 to discharge and the first inductor 4 to store energy; control the upper switch group of the at least one phase of first bridge arm 3 to be on and the lower switch group of the at least one phase of first bridge arm 3 to be off in a second time period of the first half cycle, to cause the first battery 1 to discharge, the first inductor 4 to release the stored energy, and the second battery 2 to charge;

control the upper switch group of the at least one phase of first bridge arm 3 to be on and the lower switch group of the at least one phase of first bridge arm 3 to be off in a first time period of the second half cycle, to cause the first battery 1 to charge, the second battery 2 to discharge, and the first inductor 4 to store energy; and control the lower switch group of the at least one phase of first bridge arm 3 to be on and the upper switch group of the at least one phase of first bridge arm 3 to be off in a second time period of the second half cycle, to cause the first battery 1 to charge and the first inductor 4 to release the stored energy.

The working principle of heating the first battery 1 and the second battery 2 by using the energy processing apparatus in FIG. 2 in the first preset state will be described in detail below with reference to FIG. 3A to FIG. 3D.

In FIG. 3A (i.e., in the first time period of the first half cycle), the controller 5 controls the upper switch group of the N phases of first bridge arms 3 to be off and at least one switch transistor of the lower switch group of the N phases of first bridge arms 3 to be on, so that current flows out of the positive electrode of the first battery 1, sequentially flows through the inductor of the N phases of first inductors 4 that is connected to the turned-on lower switch transistor and the turned-on lower switch transistor of the N phases of first bridge arms 3, and then returns to the negative electrode of the first battery 1. In this way, it can achieve the effect that the first battery 1 charges the inductor of the N phases of first inductors 4 that is connected to the turned-on lower switch transistor (to store energy). In addition, by controlling the number and duty cycle of the lower switch transistors which are on, the magnitude of the charging current can be controlled, thus controlling the magnitude of the charging power.

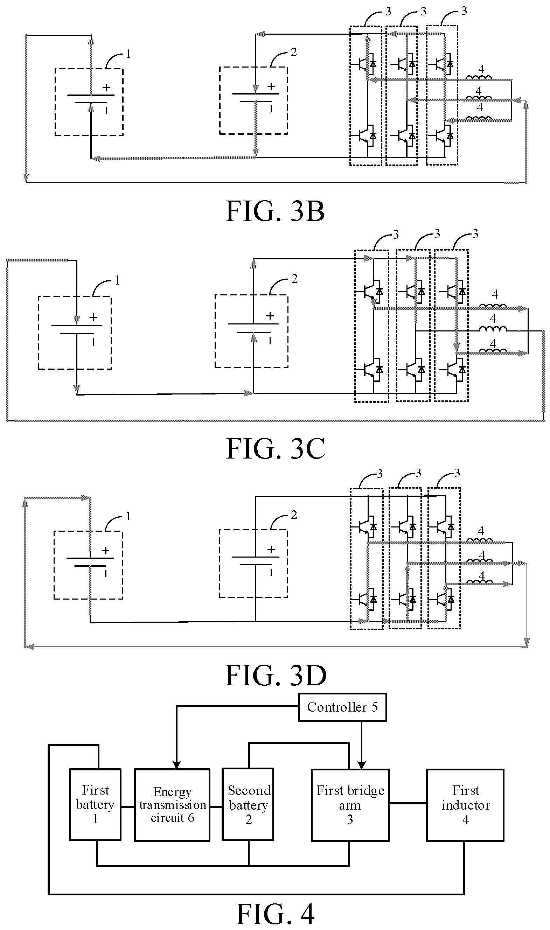

Then, in FIG. 3B (i.e., in the second time period of the first half cycle), the controller 5 controls the lower switch group of the N phases of first bridge arms 3 to be off and at least one switch transistor of the upper switch group of the N phases of first bridge arms 3 to be on, so that current flows out of the first battery 1, sequentially flows through the inductor of the N phases of first inductors 4 that is connected to the turned-on upper switch transistor, the turned-on upper switch transistor of the N phases of first bridge arms 3, the positive electrode of the second battery 2 and the negative electrode of the second battery 2, and then returns to the first battery 1. In this way, the energy in the first battery 1 and the N phases of first inductors 4 can be transferred to the second battery 2, thus achieving the charging of the second battery 2 through both the first battery 1 and the N phases of first inductors 4, that is, achieving the boost charging of the second battery 2.

Then, in FIG. 3C (i.e., in the first time period of the second half cycle), the controller 5 controls the lower switch group of the N phases of first bridge arms 3 to be off and at least one switch transistor of the upper switch group of the N phases of first bridge arms 3 to be on, so that current flows out of the second battery 2, sequentially flows through the turned-on upper switch transistor of the N phases of first bridge arms 3, the inductor of the N phases of first inductors 4 that is connected to the turned-on upper switch transistor, the positive electrode of the first battery 1 and the negative electrode of the first battery 1, and then returns to the second battery 2. In this way, the energy in the second battery 2 can be transferred to the inductor of the N phases of first inductors 4 that is connected to the turned-on upper switch transistor, and the first battery 1, thus achieving the charging of the inductor of the N phases of first inductors 4 that is connected to the turned-on upper switch transistor, and the first battery 1 through the second battery 2. In this way, the buck charging of the first battery 1 through the second battery 2 can be achieved.

Finally, in FIG. 3D (i.e., in the second time period of the second half cycle), the controller 5 controls the upper switch group of the N phases of first bridge arms 3 to be off and at least one switch transistor of the lower switch group of the N phases of first bridge arms 3 to be on, so that current flows out of the inductor of the N phases of first inductors 4 that is connected to the turned-on lower switch transistor, sequentially flows through the positive electrode of the first battery 1, the negative electrode of the first battery 1 and the turned-on lower switch transistor of the N phases of first bridge arms 3, and then returns to the inductor of the N phases of first inductors 4 that is connected to the turned-on lower switch transistor. In this way, the energy in the N phases of first inductors 4 can be transferred to the first battery 1, thus achieving the charging of the first battery 1 through the N phases of first inductors 4.

Therefore, by controlling the upper and lower switch groups of the N phases of first bridge arms 3 to be on alternately, the cyclic working in the states in FIG. 3A to FIG. 3D is achieved to complete the charging and discharging of the first battery 1, and the charging and discharging of the second battery 2, that is, complete the charging and discharging of the first battery 1 and the second battery 2, thus achieving the self-heating of the first battery 1 and the second battery 2.

FIG. 4 is a block diagram of an energy processing apparatus according to another exemplary embodiment. Referring to FIG. 4, the energy processing apparatus may further include an energy transmission circuit 6 arranged between the first battery 1 and the second battery 2. The energy transmission circuit 6 is connected to the controller 5. The energy transmission circuit 6 is configured to achieve energy transmission between the first battery 1 and the second battery 2. In this case, the controller is further configured to control the energy transmission circuit 6, to cause the first battery 1 and the second battery 2 to alternately charge and discharge (for examples, cyclically charge and discharge) to achieve the self-heating of the first battery 1 and the second battery 2, that is, achieve the self-heating of the first battery 1 and the second battery 2 through the energy transmission circuit 6.

In the present disclosure, when the batteries need to be heated, the first battery 1 and the second battery 2 may be self-heated through the energy transmission circuit 6 only, or the first battery 1 and the second battery 2 may be self-heated through the first bridge arm 3 only, or the first battery 1 and the second battery 2 may be self-heated through both of the self-heating methods, thus maximizing the heating efficiency of the batteries.

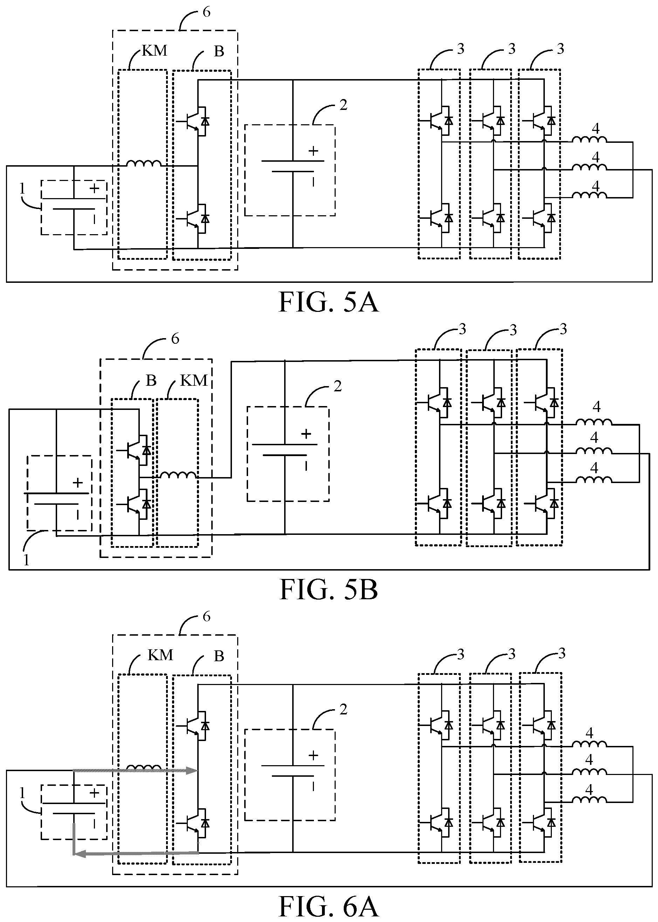

Below is a detailed description of the specific structure of the energy transmission circuit 6. Specifically, referring to FIG. 5A and FIG. 5B, the energy transmission circuit 6 includes M phases of second bridge arms B and M phases of second inductor KM, where M≥1. That is, the energy transmission circuit 6 includes at least one phase of second bridge arm B and at least one phase of second inductor KM.

The M phases of second bridge arms B and the M phases of inductors KM may be connected to the first battery 1 and the second battery 2 in various ways. In an implementation, referring to FIG. 5A, a first end of each phase of second bridge arm B (i.e., a first bus terminal of the M phases of second bridge arms B) is connected to the positive electrode of the second battery 2. A second end of each phase of second bridge arm B (i.e., a second bus terminal of the M phases of second bridge arms B) is separately connected to the negative electrode of the second battery 2 and the negative electrode of the first battery 1. The first end of each phase of second inductor KM is connected to the midpoint of the corresponding second bridge arm B. That is, the first ends of the M phases of second inductors KM are correspondingly connected to the midpoints of the M phases of second bridge arms B one to one. The second end of each phase of second inductor KM is connected to the positive electrode of the first battery 1. That is, the second ends of the M phases of second inductors KM are jointly connected to form a neutral point. The neutral point is connected to the positive electrode of the first battery 1. In this case, the voltage of the first battery 1 is lower than the voltage of the second battery 2.

In another implementation, referring to FIG. 5B, a first end of each phase of second bridge arm B (i.e., a first bus terminal of the M phases of second bridge arms B) is connected to the positive electrode of the first battery 1. A second end of each phase of second bridge arm B (i.e., a second bus terminal of the M phases of second bridge arms B) is separately connected to the negative electrode of the first battery 1 and the negative electrode of the second battery 2. The first end of each phase of second inductor KM is connected to the midpoint of the corresponding second bridge arm B. That is, the first ends of the M phases of second inductors KM are correspondingly connected to the midpoints of the M phases of second bridge arms B one to one. The second end of each phase of second inductor KM is connected to the positive electrode of the second battery 2. That is, the second ends of the M phases of second inductors KM are jointly connected to form a neutral point. The neutral point is connected to the positive electrode of the second battery 2. In this case, the voltage of the first battery 1 is higher than the voltage of the second battery 2.

For the energy processing apparatuses in FIG. 5A and FIG. 5B, the controller 5 may be further configured to control the second bridge arm B in a second preset state, to cause the first battery 1 and the second battery 2 to alternately charge and discharge to achieve self-heating of the first battery 1 and the second battery 2. The second preset state is a state that the self-heating of the first battery 1 and the second battery 2 is achieved through the second bridge arm B.

Specifically, the controller 5 may control at least one phase of second bridge arm B, to cause the first battery 1 and the second battery 2 to alternately charge and discharge to achieve self-heating of the first battery 1 and the second battery 2, that is, to achieve self-heating of the first battery 1 and the second battery 2 through at least one phase of second bridge arm B. A second target inductor is an inductor of the M phases of inductors KM that is connected to the at least one phase of second bridge arm B.

It is to be understood that although FIG. 5A and FIG. 5B provide illustration by taking M=1 as an example, those skilled in the art may understand that the number of bridge arms and the number of inductors in FIG. 5A and FIG. 5B are only exemplary. In addition, in the present disclosure, the energy transmission circuit 6 may be any other circuit that can achieve voltage boosting or bucking, in addition to the circuit structure shown in FIG. 5A or FIG. 5B, which is not specifically limited in the present disclosure.

Below is a detailed description of the specific implementation of controlling the second bridge arm B in the second preset state, to cause the first battery 1 and the second battery 2 to alternately charge and discharge.

In an implementation, for the energy processing apparatus in FIG. 5A, the controller 5 is configured to: control the second bridge arm B in a first half cycle of a control cycle, to cause the first battery 1 to discharge and the second battery 2 to charge; and control the second bridge arm B in a second half cycle of the control cycle, to cause the first battery 1 to charge and the second battery 2 to discharge.

Specifically, it is configured to control a lower switch group of the at least one phase of second bridge arm B to be on and an upper switch group of the at least one phase of second bridge arm B to be off in a first time period of the first half cycle, to cause the first battery 1 to discharge and the first inductor 4 to store energy; control the upper switch group of the at least one phase of second bridge arm B to be on and the lower switch group of the at least one phase of second bridge arm B to be off in a second time period of the first half cycle, to cause the first battery 1 to discharge, the first inductor 4 to release the stored energy, and the second battery 2 to charge;
control the upper switch group of the at least one phase of second bridge arm B to be on and the lower switch group of the at least one phase of second bridge arm B to be off in a first time period of the second half cycle, to cause the first battery 1 to charge, the second battery 2 to discharge, and the first inductor 4 to store energy; and control the lower switch group of the at least one phase of second bridge arm B to be on and the upper switch group of the at least one phase of second bridge arm B to be off in a second time period of the second half cycle, to cause the first battery 1 to charge and the first inductor 4 to release the stored energy.

In another implementation, for the energy processing apparatus in FIG. 5B, the controller 5 is configured to: control the second bridge arm B in a first half cycle of a control cycle, to cause the first battery 1 to charge and the second battery 2 to discharge; and control the second bridge arm B in a second half cycle of the control cycle, to cause the first battery 1 to discharge and the second battery 2 to charge.

Specifically, it is configured to control a lower switch group of the at least one phase of second bridge arm B to be on and an upper switch group of the at least one phase of second bridge arm B to be off in a first time period of the first half cycle, to cause the second battery 2 to discharge and the first inductor 4 to store energy; control the upper switch group of the at least one phase of second bridge arm B to be on and the lower switch group of the at least one phase of second bridge arm B to be off in a second time period of the first half cycle, to cause the second battery 2 to discharge, the first inductor 4 to release the stored energy, and the first battery 1 to charge;
control the upper switch group of the at least one phase of second bridge arm B to be on and the lower switch group of the at least one phase of second bridge arm B to be off in a first time period of the second half cycle, to cause the first battery 1 to discharge, the second battery 2 to charge, and the first inductor 4 to store energy; and control the lower switch group of the at least one phase of second bridge arm B to be on and the upper switch group of the at least one phase of second bridge arm B to be off in a second time period of the second half cycle, to cause the second battery 2 to charge and the first inductor 4 to release the stored energy.

The working principle of heating the first battery 1 and the second battery 2 by using the energy processing apparatus in FIG. 5A in the second preset state will be described in detail below with reference to FIG. 6A to FIG. 6D.

In FIG. 6A (i.e., in the first time period of the first half cycle), the controller 5 controls the upper switch group of the M phases of second bridge arms B to be off and at least one switch transistor of the lower switch group of the M phases of second bridge arms B to be on, so that current flows out of the positive electrode of the first battery 1, sequentially flows through the inductor of the M phases of second inductors KM that is connected to the turned-on lower switch transistor and the turned-on lower switch transistor of the M phases of second bridge arms B, and then returns to the negative electrode of the first battery 1. In this way, it can achieve the effect that the first battery 1 charges the inductor of the M phases of second inductors KM that is connected to the turned-on lower switch transistor (to store energy). In addition, by controlling the number and duty cycle of the lower switch transistors which are on, the magnitude of the charging current can be controlled, thus controlling the magnitude of the charging power.

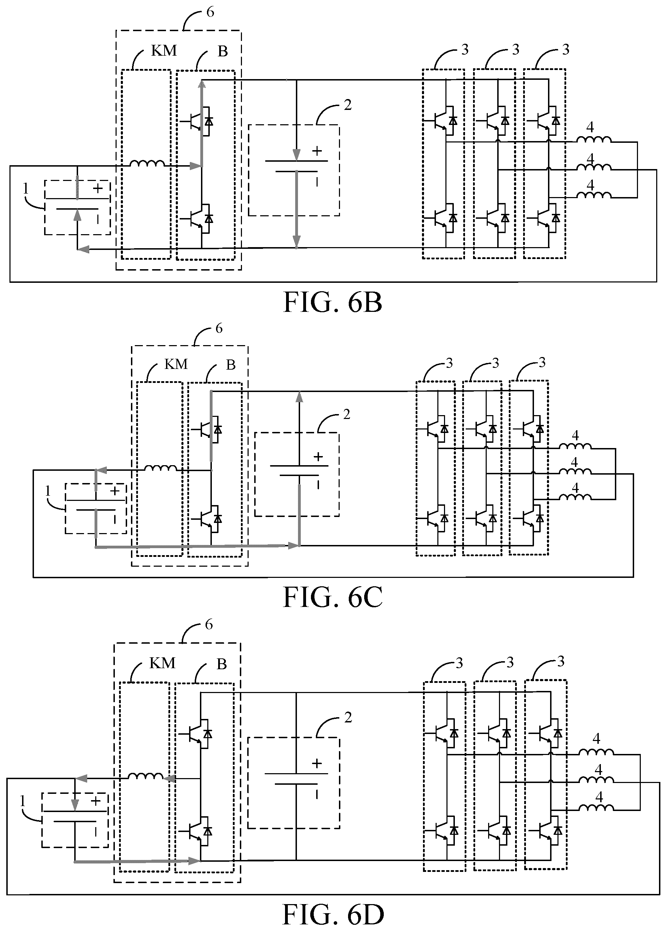

Then, in FIG. 6B (i.e., in the second time period of the first half cycle), the controller 5 controls the lower switch group of the M phases of second bridge arms B to be off and at least one switch transistor of the upper switch group of the M phases of second bridge arms B to be on, so that current flows out of the first battery 1, sequentially flows through the inductor of the M phases of second inductors KM that is connected to the turned-on upper switch transistor, the turned-on upper switch transistor of the M phases of second bridge arms B, the positive electrode of the second battery 2 and the negative electrode of the second battery 2, and then returns to the first battery 1. In this way, the energy in the first battery 1 and the M phases of second inductors KM can be transferred to the second battery 2, thus achieving the charging of the second battery 2 through both the first battery 1 and the M phases of second inductors KM, that is, achieving the boost charging of the second battery 2 through the first battery 1.

Then, in FIG. 6C (i.e., in the first time period of the second half cycle), the controller 5 controls the lower switch group of the M phases of second bridge arms B to be off and at least one switch transistor of the upper switch group of the M phases of second bridge arms B to be on, so that current flows out of the second battery 2, sequentially flows through the turned-on upper switch transistor of the M phases of second bridge arms B, the inductor of the M phases of second inductors KM that is connected to the turned-on upper switch transistor, the positive electrode of the first battery 1 and the negative electrode of the first battery 1, and then returns to the second battery 2. In this way, the energy in the second battery 2 can be transferred to the inductor of the M phases of second inductors KM that is connected to the turned-on upper switch transistor, and the first battery 1, thus achieving the charging of the inductor of the M phases of second inductors KM that is connected to the turned-on upper switch transistor, and the first battery 1 through the second battery 2. In this way, the buck charging of the first battery 1 through the second battery 2 can be achieved.

Finally, in FIG. 6D (i.e., in the second time period of the second half cycle), the controller 5 controls the upper switch group of the M phases of second bridge arms B to be off and at least one switch transistor of the lower switch group of the M phases of second bridge arms B to be on, so that current flows out of the inductor of the M phases of second inductors KM that is connected to the turned-on lower switch transistor, sequentially flows through the positive electrode of the first battery 1, the negative electrode of the first battery 1 and the turned-on lower switch transistor of the M phases of second bridge arms B, and then returns to the inductor of the M phases of second inductors KM that is connected to the turned-on lower switch transistor. In this way, the energy in the M phases of second inductors KM can be transferred to the first battery 1, thus achieving the charging of the first battery 1 through the M phases of second inductors KM.

Therefore, by controlling the upper and lower switch groups of the M phases of second bridge arms B to be on alternately, the cyclic working in the states in FIG. 6A to FIG. 6D is achieved to complete the charging and discharging of the first battery 1, and the charging and discharging of the second battery 2, that is, complete the charging and discharging of the first battery 1 and the second battery 2, thus achieving the self-heating of the first battery 1 and the second battery 2.

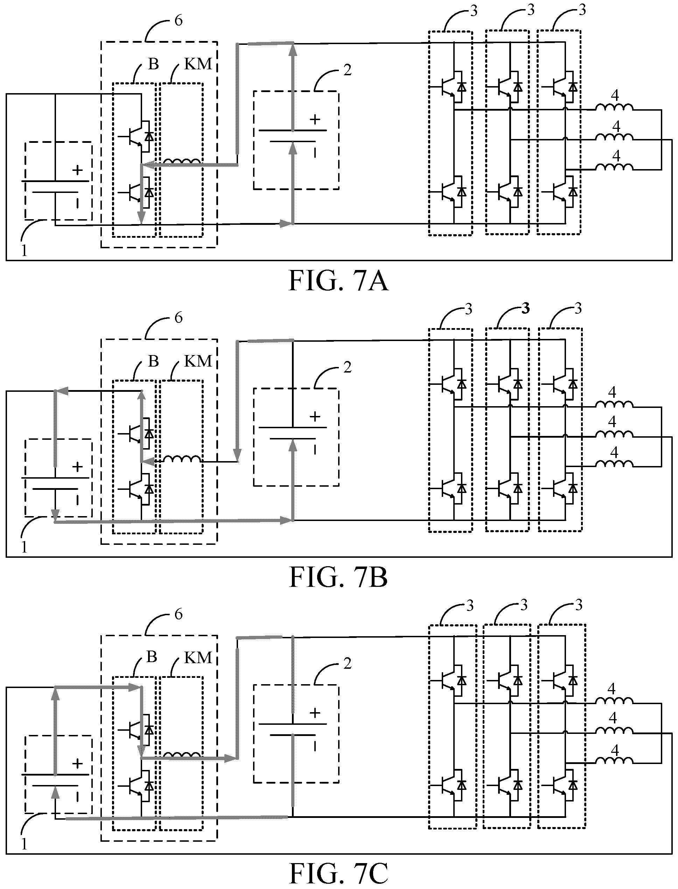

The working principle of heating the first battery 1 and the second battery 2 by using the energy processing apparatus in FIG. 5B in the second preset state will be described in detail below with reference to FIG. 7A to FIG. 7D.

In FIG. 7A (i.e., in the first time period of the first half cycle), the controller 5 controls the upper switch group of the M phases of second bridge arms B to be off and at least one switch transistor of the lower switch group of the M phases of second bridge arms B to be on, so that current flows out of the positive electrode of the second battery 2, sequentially flows through the inductor of the M phases of second inductors KM that is connected to the turned-on lower switch transistor and the turned-on lower switch transistor of the M phases of second bridge arms B, and then returns to the negative electrode of the second battery 2. In this way, it can achieve the effect that the second battery 2 charges the inductor of the M phases of second inductors KM that is connected to the turned-on lower switch transistor (to store energy). In addition, by controlling the number and duty cycle of the lower switch transistors which are on, the magnitude of the charging current can be controlled, thus controlling the magnitude of the charging power.

Then, in FIG. 7B (i.e., in the second time period of the first half cycle), the controller 5 controls the lower switch group of the M phases of second bridge arms B to be off and at least one switch transistor of the upper switch group of the M phases of second bridge arms B to be on, so that current flows out of the second battery 2, sequentially flows through the inductor of the M phases of second inductors KM that is connected to the turned-on upper switch transistor, the turned-on upper switch transistor of the M phases of second bridge arms B, the positive electrode of the first battery 1 and the negative electrode of the first battery 1, and then returns to the second battery 2. In this way, the energy in the second battery 2 and the M phases of second inductors KM can be transferred to the first battery 1, thus achieving the charging of the first battery 1 through both the second battery 2 and the M phases of second inductors KM, that is, achieving the boost charging of the first battery 1 through the second battery 2.

Then, in FIG. 7C (i.e., in the first time period of the second half cycle), the controller 5 controls the lower switch group of the M phases of second bridge arms B to be off and at least one switch transistor of the upper switch group of the M phases of second bridge arms B to be on, so that current flows out of the first battery 1, sequentially flows through the turned-on upper switch transistor of the M phases of second bridge arms B, the inductor of the M phases of second inductors KM that is connected to the turned-on upper switch transistor, the positive electrode of the second battery 2 and the negative electrode of the second battery 2, and then returns to the first battery 1. In this way, the energy in the first battery 1 can be transferred to the inductor of the M phases of second inductors KM that is connected to the turned-on upper switch transistor, and the second battery 2, thus achieving the charging of the inductor of the M phases of second inductors KM that is connected to the turned-on upper switch transistor, and the second battery 2 through the first battery 1. In this way, the buck charging of the second battery 2 through the first battery 1 can be achieved.

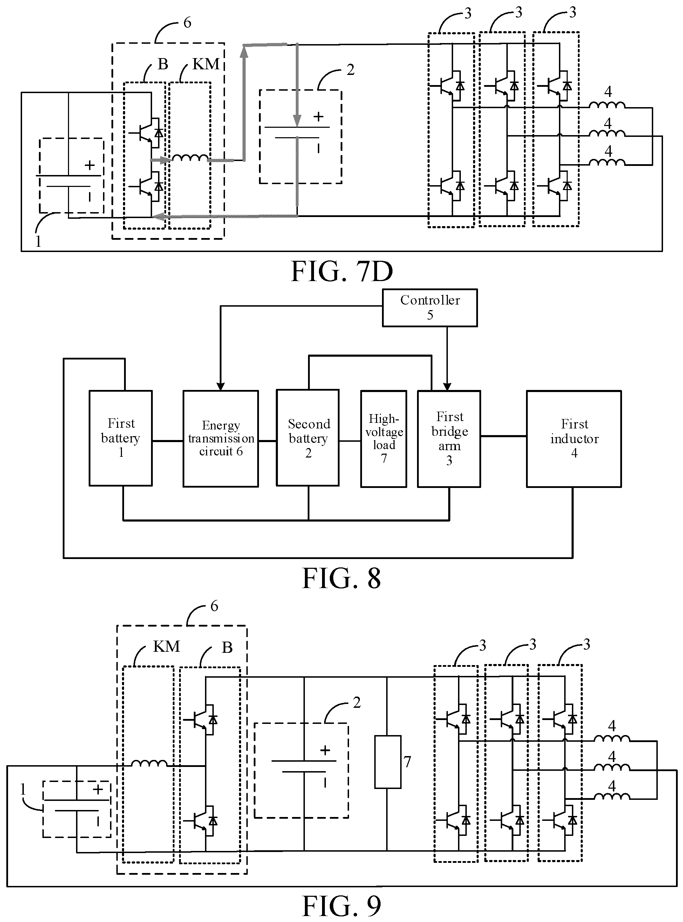

Finally, in FIG. 7D (i.e., in the second time period of the second half cycle), the controller 5 controls the upper switch group of the M phases of second bridge arms B to be off and at least one switch transistor of the lower switch group of the M phases of second bridge arms B to be on, so that current flows out of the inductor of the M phases of second inductors KM that is connected to the turned-on lower switch transistor, sequentially flows through the positive electrode of the second battery 2, the negative electrode of the second battery 2 and the turned-on lower switch transistor of the M phases of second bridge arms B, and then returns to the inductor of the M phases of second inductors KM that is connected to the turned-on lower switch transistor. In this way, the energy in the M phases of second inductors KM can be transferred to the second battery 2, thus achieving the charging of the second battery 2 through the M phases of second inductors KM.

Therefore, by controlling the upper and lower switch groups of the M phases of second bridge arms B to be on alternately, the cyclic working in the states in FIG. 7A to FIG. 7D is achieved to complete the charging and discharging of the first battery 1, and the charging and discharging of the second battery 2, that is, complete the charging and discharging of the first battery 1 and the second battery 2, thus achieving the self-heating of the first battery 1 and the second battery 2.

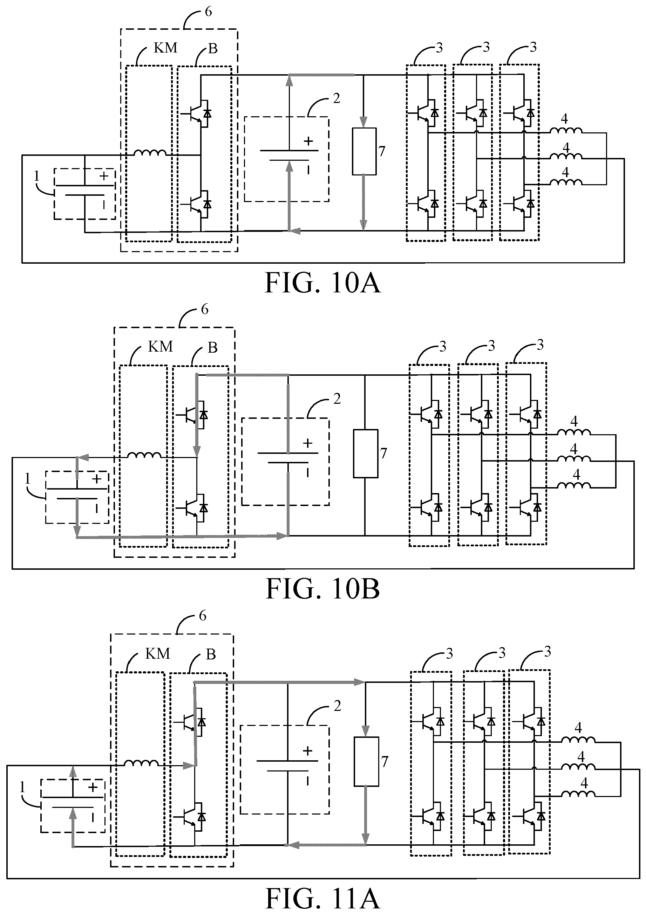

Referring to FIG. 8 and FIG. 9, the second battery 2 is configured to be connected to a high-voltage load 7. In this case, the second battery 2 may discharge in various ways. In an implementation, the controller 5 may be further configured to: control the second battery 2 to supply power to the high-voltage load 7 (as shown in FIG. 10A) in a third preset state, that is, control the second battery 2 to directly discharge to the high-voltage load 7. The third preset state is a state that only the second battery 2 discharges.

In another implementation, the controller 5 may be further configured to: control the energy transmission circuit 6 in the third preset state, to cause the second battery 2 to charge the first battery 1 (as shown in FIG. 10B), that is, control the second battery 2 to discharge to the first battery 1 through the energy transmission circuit 6.

In yet another implementation, the controller 5 may be further configured to: control the second battery 2 to supply power to the high-voltage load 7 and control the energy transmission circuit 6 in the third preset state, to cause the second battery 2 to charge the first battery 1, that is, control the second battery 2 to charge the first battery 1 while supplying power to the high-voltage load 7.

When the N phases of first bridge arms 3 are a vehicle controller, the N phases of bridge arms B may also serve as the high-voltage load. That is, the second battery 2 discharges to the N phases of first bridge arms 3. When the N phases of first inductors 4 are motor coils, the N phases of first inductors 4 may also serve as the high-voltage load. That is, the second battery 2 discharges to the N phases of first inductors 4.

For the energy processing apparatuses in FIG. 8 and FIG. 9, the first battery 1 may also discharge in various ways. In an implementation, the controller 5 may be further configured to control the energy transmission circuit 6 in a fourth preset state, to cause the first battery 1 to supply power to the high-voltage load 7 (as shown in FIG. 11A), that is, control the first battery 1 to discharge to the high-voltage load 7 through the energy transmission circuit 6. The fourth preset state is a state that only the first battery 1 discharges.

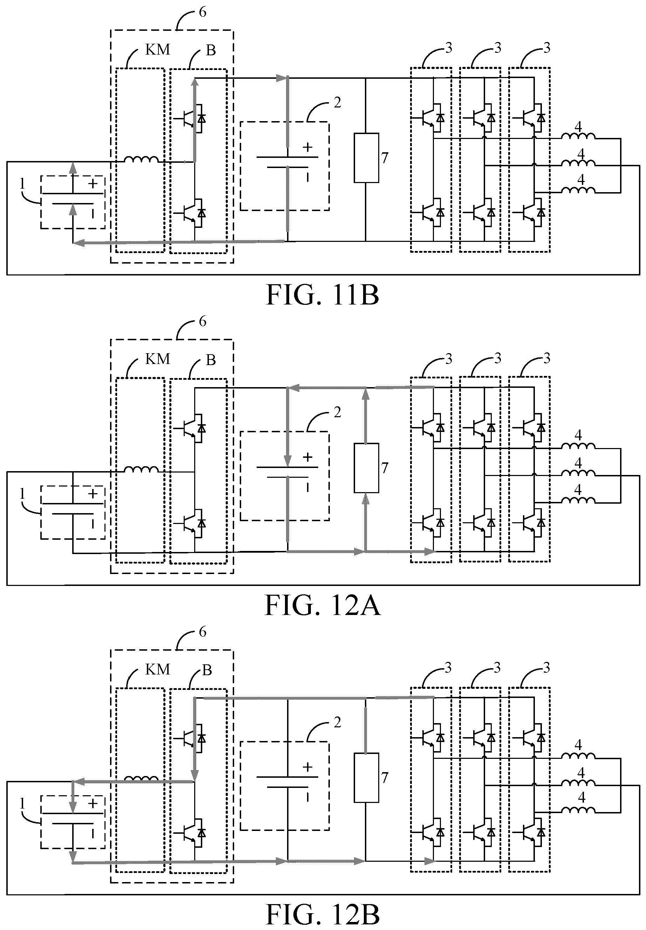

In another implementation, the controller 5 may be further configured to control the energy transmission circuit 6 in the fourth preset state, to cause the first battery 1 to charge the second battery 2 (as shown in FIG. 11B), that is, control the first battery 1 to charge the second battery 2 through the energy transmission circuit 6.

In yet another implementation, the controller 5 may be further configured to control the energy transmission circuit 6 in the fourth preset state, to cause the first battery 1 to supply power to the high-voltage load 7 and charge the second battery 2, that is, control the first battery 1 to charge the second battery 2 while supplying power to the high-voltage load 7.

When the N phases of first bridge arms 3 are a vehicle controller, the N phases of first bridge arms 3 may also serve as the high-voltage load. That is, the first battery 1 discharges to the N phases of first bridge arms 3. When the N phases of first inductors 4 are motor coils, the N phases of first inductors 4 may also serve as the high-voltage load. That is, the first battery 1 discharges to the N phases of first inductors 4.

For the energy processing apparatuses in FIG. 8 and FIG. 9, the controller 5 may be further configured to control the energy transmission circuit 6 and the second battery 2 in a fifth preset state, to cause the second battery 2 and the first battery 1 to simultaneously supply power to the high-voltage load 7. The fifth preset state is a state that the first battery 1 and the second battery 2 simultaneously supply power to the high-voltage load.

In the present disclosure, the first battery 1 and the second battery 2 may supply power to the high-voltage load separately or jointly according to the load input requirement.

If the first battery 1 is a power type battery and the second battery 2 is an energy type battery, when the high-voltage load 7 has an instantaneous high-power demand, the first battery 1, which is a power type battery, needs to release high-power energy to the high-voltage load 7 through the energy transmission circuit 6. This requires a larger volume of the energy transmission circuit 6, which undoubtedly increases the cost. The larger the power of the energy transmission circuit 6, the larger the volume, and correspondingly, the higher the cost. If the first battery 1 is an energy type battery and the second battery 2 is a power type battery, when the high-voltage load 7 has an instantaneous high-power demand, the second battery 2, which is a power type battery, needs to supply power to it. The second battery 2 directly supplies power to the high-voltage load 7. Therefore, even if the second battery 2 releases high-power energy to the high-voltage load, it will not increase the cost. Therefore, in an embodiment, the first battery 1 is an energy type battery and the second battery 2 is a power type battery, so as to reduce the cost.

In addition, when the vehicle is in a braking state, the high-voltage load 7, the first bridge arm 3, and the first inductor 4 may generate feedback current. In this case, in order to achieve energy recycling, the feedback current may be fed back to at least one of the first battery 1 and the second battery 2. Specifically, for the energy processing apparatuses in FIG. 8 and FIG. 9, the controller 5 may be further configured to control the motor controller in a sixth preset state to store the braking feedback energy in the second battery 2, that is, feed back the feedback current generated by the high-voltage load 7, the first bridge arm 3, and the first inductor 4 to the second battery 2, and/or control the motor controller and the second bridge arm B to store the braking feedback energy in the first battery 1, that is, feed back the feedback current generated by the high-voltage load 7, the first bridge arm 3, and the first inductor 4 to the first battery 1. The sixth preset state is a vehicle braking state.

In an implementation, the controller 5 may be further configured to control the motor controller in the sixth preset state to store the braking feedback energy in the second battery 2, that is, feed back the feedback current generated by the high-voltage load 7, the first bridge arm 3, and the first inductor 4 to the second battery 2 (as shown in FIG. 12A).

In another implementation, the controller 5 may be further configured to control the motor controller and the second bridge arm B in the sixth preset state to store the braking feedback energy in the first battery 1, that is, feed back the feedback current generated by the high-voltage load 7, the first bridge arm 3, and the first inductor 4 to the first battery 1 (as shown in FIG. 12B).

In yet another implementation, the controller 5 may be further configured to control the motor controller in the sixth preset state to store the braking feedback energy in the second battery 2, and simultaneously control the motor controller and the second bridge arm B to store the braking feedback energy in the first battery 1, that is, feed back the feedback current generated by the high-voltage load 7, the first bridge arm 3, and the first inductor 4 to the second battery 2 and the first battery 1.

In the present disclosure, the high-voltage load 7 may feed back energy to the first battery 1 and the second battery 2 separately or simultaneously according to the actual situation.

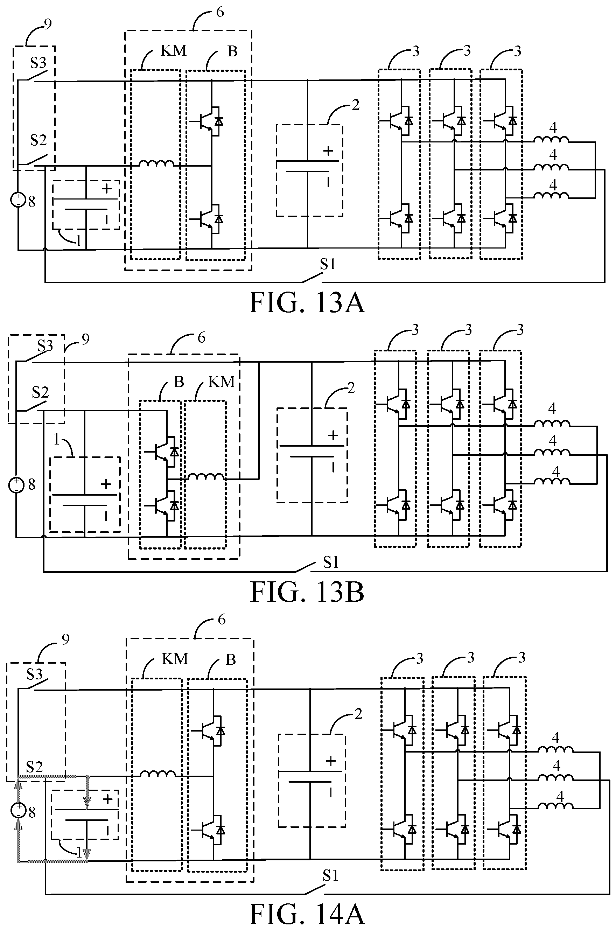

Referring to FIG. 13A and FIG. 13B, the energy processing apparatus may further include: a DC charging port 8, a switching circuit 9, and switching device S1.

A first end of the switching circuit 9 is connected to a positive electrode of the DC charging port 8. A second end of the switching circuit 9 is selectively connected to the positive electrode of the first battery 1 and the positive electrode of the second battery 2. The DC charging port 8 is configured to be connected to an external power supply device. A first end of the switching device S1 is connected to each phase of first inductor 4. A second end of the switching device S1 is connected to the positive electrode of the first battery 1.

In an implementation, referring to FIG. 13A and FIG. 13B, the switching circuit 9 includes a first switch S2 and a second switch S3. A first end of the first switch S2 is separately connected to the energy transmission circuit 6 and the positive electrode of the first battery 1. A second end of the first switch S2 is connected to the positive electrode of the DC charging port 8. A first end of the second switch S3 is separately connected to the positive electrode of the second battery 2 and the energy transmission circuit 6. A second end of the second switch S3 is separately connected to the first switch S2 and the positive electrode of the DC charging port 8. When the switching circuit 9 needs to be connected to the positive electrode of the first battery 1, the first switch S2 may be controlled to be on and the second switch S3 may be controlled to be off. When the switching circuit 9 needs to be connected to the positive electrode of the second battery 2, the first switch S2 may be controlled to be off and the second switch S3 may be controlled to be on.

In another implementation, the switching circuit 9 may be a single-pole double-throw switch to selectively connect to the positive electrode of the first battery 1 and the positive electrode of the second battery 2.

In this case, the controller 5 is separately connected to the switching circuit 9 and the switching device S1, and may be further configured to, in a first mode, control the switching circuit 9 to be connected to the positive electrode of the first battery 1 (that is, control the first switch S2 to be on and the second switch S3 to be off) and control the switching device S1 to be off to charge the first battery 1, and control the second bridge arm B to supply power to the second battery 2. The first mode is a state that the first battery 1 charges and simultaneously power is supplied to the second battery 2 through the second bridge arm B.

The working principle of charging the first battery 1 and simultaneously supplying power to the second battery 2 through the second bridge arm B by using the energy processing apparatus in FIG. 13A in the first mode will be described in detail below with reference to FIG. 14A to FIG. 14C.

In FIG. 14A, the controller 5 controls the first switch S2 to be on and the second switch S3 and the switching device S1 to be off, and controls the upper switch group and the lower switch group of the M phases of second bridge arms B to be off, that is, the M phases of second bridge arms B do not act. In this case, the external power supply device charges the first battery 1 solely through the DC charging port 8.

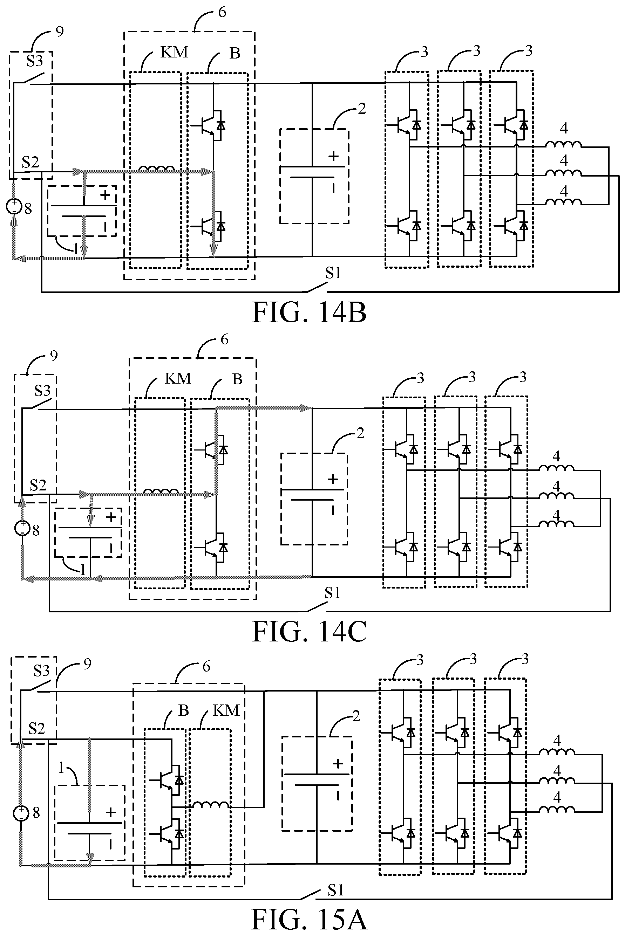

Then, in FIG. 14B, the controller 5 controls at least one switch transistor of the lower switch group of the M phases of second bridge arms B to be on (the upper switch group of the M phases of second bridge arms B is in an off state), so that the external power supply device charges the first battery 1 through DC charging port 8, and simultaneously supplies power to the inductor of the M phases of second inductors KM that is connected to the turned-on lower switch transistor to store energy.

Then, in FIG. 14C, the controller 5 controls the lower switch group of the M phases of second bridge arms B to be off, so that the external power supply device charges the first battery 1 through the DC charging port 8, and simultaneously supplies power to the second battery 2 together with the M phases of second inductors KM, thus achieving the boost charging of the second battery 2.

The working principle of charging the first battery 1 and simultaneously supplying power to the second battery 2 through the energy transmission circuit 6 by using the energy processing apparatus in FIG. 13B in the first mode will be described in detail below with reference to FIG. 15A to FIG. 15B.

In FIG. 15A, the controller 5 controls the first switch S2 to be on and the switching device S1 and the second switch S3 to be off, and controls the upper switch group and the lower switch group of the M phases of second bridge arms B to be off, that is, the M phases of second bridge arms B do not act. In this case, the external power supply device charges the first battery 1 solely through the DC charging port 8.

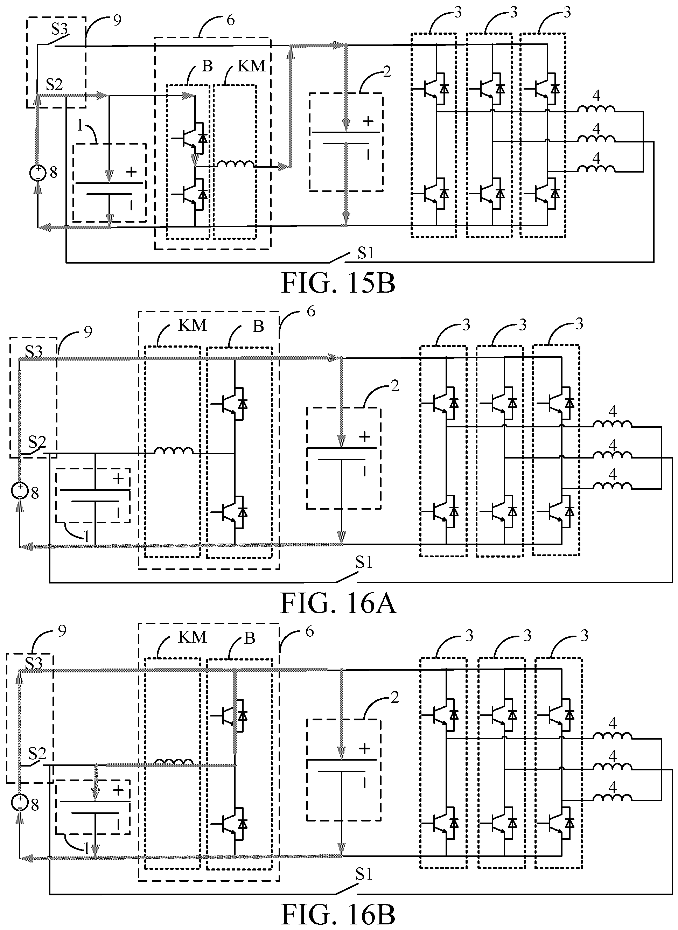

Then, in FIG. 15B, the controller 5 controls at least one switch transistor of the upper switch group of the M phases of second bridge arms B to be on (the lower switch group of the M phases of second bridge arms B is in an off state), so that the external power supply device charges the first battery 1 through DC charging port 8, and simultaneously supplies power to the second battery 2 through the inductor of the M phases of second inductors KM that is connected to the turned-on upper switch transistor, thus achieving the buck charging of the second battery 2.

For the energy processing apparatuses in FIG. 13A and FIG. 13B, the controller 5 is separately connected to the switching circuit 9 and the switching device S1, and may be further configured to, in a second mode, control the switching circuit 9 to be connected to the positive electrode of the second battery 2 (that is, control the second switch S3 to be on and the first switch S2 to be off) and control the switching device S1 to be off to charge the second battery 2, and control the second bridge arm B to supply power to the first battery 1. The second mode is a state that the second battery 2 charges and simultaneously power is supplied to the first battery 1 through the second bridge arm B.

The working principle figure of charging the second battery 2 and simultaneously supplying power to the first battery 1 through the second bridge arm B by using the energy processing apparatus in FIG. 13A in the second mode will be described in detail below with reference to FIG. 16A and FIG. 16B.

In FIG. 16A, the controller 5 controls the second switch S3 to be on and the switching device S1 and the first switch S2 to be off, and controls the upper switch group and the lower switch group of the M phases of second bridge arms B to be off, that is, the M phases of second bridge arms B do not act. In this case, the external power supply device charges the second battery 2 solely through the DC charging port 8.

Then, in FIG. 16B, the controller 5 controls at least one switch transistor of the upper switch group of the M phases of second bridge arms B to be on (the lower switch group of the M phases of second bridge arms B is in an off state), so that the external power supply device charges the second battery 2 through DC charging port 8, and simultaneously supplies power to the first battery 1 through the inductor of the M phases of second inductors KM that is connected to the turned-on upper switch transistor, thus achieving the buck charging of the first battery 1.

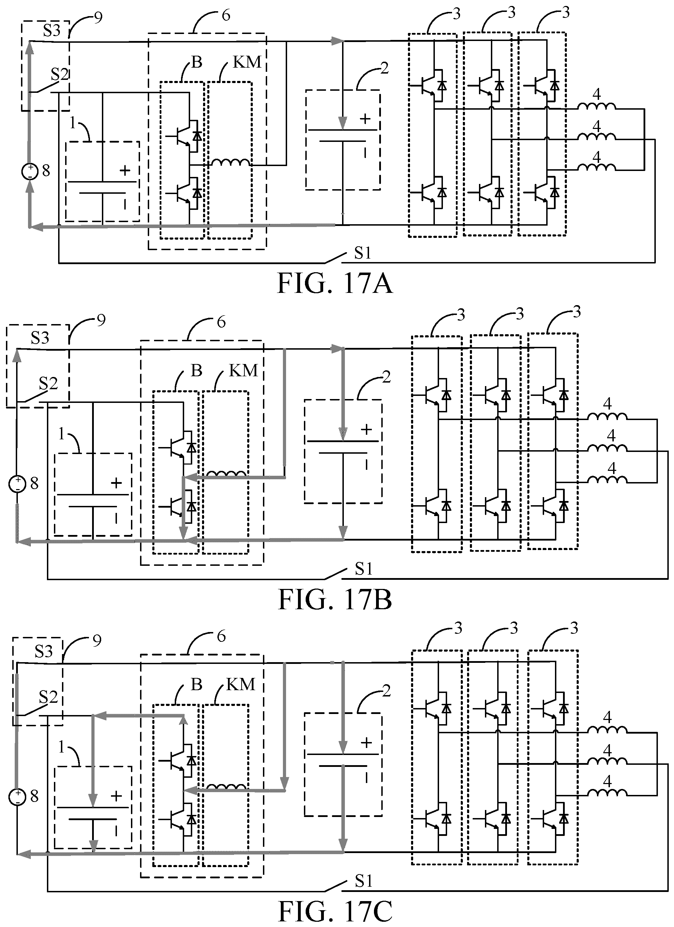

The working principle figure of charging the second battery 2 and simultaneously supplying power to the first battery 1 through the second bridge arm B by using the energy processing apparatus in FIG. 13B in the second mode will be described in detail below with reference to FIG. 17A to FIG. 17C.

In FIG. 17A, the controller 5 controls the second switch S3 to be on and the switching device S1 and the first switch S2 to be off, and controls the upper switch group and the lower switch group of the M phases of second bridge arms B to be off, that is, the M phases of second bridge arms B do not act. In this case, the external power supply device charges the second battery 2 solely through the DC charging port 8.

Then, in FIG. 17B, the controller 5 controls at least one switch transistor of the lower switch group of the M phases of second bridge arms B to be on (the upper switch group of the M phases of second bridge arms B is in an off state), so that the external power supply device charges the second battery 2 through DC charging port 8, and simultaneously supplies power to the inductor of the M phases of second inductors KM that is connected to the turned-on lower switch transistor to store energy.

Then, in FIG. 17C, the controller 5 controls the lower switch group of the M phases of second bridge arms B to be off, so that the external power supply device charges the second battery 2 through the DC charging port 8, and simultaneously supplies power to the first battery 1 together with the inductor of the M phases of second inductors KM that is connected to the turned-on lower switch transistor, thus achieving the boost charging of the first battery 1.

In the present disclosure, the charging process of the first battery 1 and the second battery 2 may be synchronized with the self-heating process of the first battery 1 and the second battery 2 described above to achieve coordinated self-heating and charging of batteries.

It is to be understood that although FIG. 6A to FIG. 7D and FIG. 9 to FIG. 17C provide illustration by taking N= 3 and M=1 as an example, those skilled in the art may understand that the number of bridge arms and the number of inductors in these figures are only exemplary.

The present disclosure further provides a vehicle, which includes the energy processing apparatus described above.

The optional implementations of the present disclosure have been described in detail above with reference to the accompanying drawings. However, the present disclosure is not limited to the specific details in the foregoing implementations, various simple variations may be made to the technical solution of the present disclosure within the range of the technical concept of the present disclosure, and these simple variations still fall within the scope of protection of the present disclosure.

In addition, it is to be understood that the various specific technical features described in the above implementations may be combined in any suitable way without contradiction. To avoid unnecessary repetition, various possible combination manners are not described in the present disclosure.

In addition, various different implementations of the present disclosure may also be arbitrarily combined without departing from the idea of the present disclosure, and these combinations shall still be regarded as content disclosed in the present disclosure.

## Claims

1. An energy processing apparatus, comprising:
a first battery (1), a second battery (2), at least one phase of first bridge arm (3), at least one phase of first inductor (4), and a controller (5),
wherein a positive electrode of the second battery (2) is connected to a first end of each phase of first bridge arm (3), and a negative electrode of the second battery (2) is separately connected to a second end of each phase of first bridge arm (3) and a negative electrode of the first battery (1);
a first end of each phase of first inductor (4) is connected to a midpoint of the corresponding first bridge arm (3), and a second end of each phase of first inductor (4) is connected to a positive electrode of the first battery (1);
the controller (5) is connected to each phase of first bridge arm (3), and the controller (5) is configured to: control the first bridge arm (3) in a first preset state, to cause the first battery (1) and the second battery (2) to alternately charge and discharge to achieve self-heating of the first battery (1) and the second battery (2).

2. The apparatus according to claim 1, wherein the controller (5) is configured to:
control the first bridge arm (3) in a first half cycle of a control cycle, to cause the first battery (1) to discharge and the second battery (2) to charge; and
control the first bridge arm (3) in a second half cycle of the control cycle, to cause the first battery (1) to charge and the second battery (2) to discharge.

3. The apparatus according to claim 2, wherein the controller (5) is configured to:
control a lower switch group of the at least one phase of first bridge arm (3) to be on and an upper switch group of the at least one phase of first bridge arm (3) to be off in a first time period of the first half cycle, to cause the first battery (1) to discharge and the first inductor (4) to store energy; and
control the upper switch group of the at least one phase of first bridge arm (3) to be on and the lower switch group of the at least one phase of first bridge arm (3) to be off in a second time period of the first half cycle, to cause the first battery (1) to discharge, the first inductor (4) to release the stored energy, and the second battery (2) to charge.

4. The apparatus according to claim 2, wherein the controller (5) is configured to:
control an upper switch group of the at least one phase of first bridge arm (3) to be on and a lower switch group of the at least one phase of first bridge arm (3) to be off in a first time period of the second half cycle, to cause the first battery (1) to charge, the second battery (2) to discharge, and the first inductor (4) to store energy; and
control the lower switch group of the at least one phase of first bridge arm (3) to be on and the upper switch group of the at least one phase of first bridge arm (3) to be off in a second time period of the second half cycle, to cause the first battery (1) to charge and the first inductor (4) to release the stored energy.

5. The apparatus according to claim 1, wherein a bridge arm of a motor controller is reused as the first bridge arm (3) and a coil of a motor is reused as the first inductor (4).

6. The apparatus according to claim 1, further comprising an energy transmission circuit (6) arranged between the first battery (1) and the second battery (2); the energy transmission circuit (6) is connected to the controller (5), and the energy transmission circuit (6) is configured to achieve energy transmission between the first battery (1) and the second battery (2).

7. The apparatus according to claim 6, wherein the energy transmission circuit (6) comprises:
at least one phase of second bridge arm (B), a first end of each phase of second bridge arm (B) being connected to the positive electrode of the second battery (2), and a second end of each phase of second bridge arm (B) being separately connected to the negative electrode of the second battery (2) and the negative electrode of the first battery (1); and
at least one phase of second inductor (KM), a first end of each phase of second inductor (KM) being connected to a midpoint of the corresponding second bridge arm (B), and a second end of each phase of second inductor (KM) being connected to the positive electrode of the first battery (1);
the controller (5) is connected to each phase of second bridge arm (B), and the controller (5) is further configured to:
control the second bridge arm (B) in a second preset state, to cause the first battery (1) and the second battery (2) to alternately charge and discharge to achieve self-heating of the first battery (1) and the second battery (2).

8. The apparatus according to claim 7, wherein the controller (5) is configured to:
control the second bridge arm (B) in a first half cycle of a control cycle, to cause the first battery (1) to discharge and the second battery (2) to charge; and
control the second bridge arm (B) in a second half cycle of the control cycle, to cause the first battery (1) to charge and the second battery (2) to discharge.

9. The apparatus according to claim 6, wherein the energy transmission circuit (6) comprises:
at least one phase of second bridge arm (B), a first end of each phase of second bridge arm (B) being connected to the positive electrode of the first battery (1), and a second end of each phase of second bridge arm (B) being separately connected to the negative electrode of the first battery (1) and the negative electrode of the second battery (2); and
at least one phase of second inductor (KM), a first end of each phase of second inductor (KM) being connected to a midpoint of the corresponding second bridge arm (B), and a second end of each phase of second inductor (KM) being connected to the positive electrode of the second battery (2);
the controller (5) is connected to each phase of second bridge arm (B), and the controller (5) is further configured to:
control the second bridge arm (B) in a second preset state, to cause the first battery (1) and the second battery (2) to alternately charge and discharge to achieve self-heating of the first battery (1) and the second battery (2).

10. The apparatus according to claim 9, wherein the controller (5) is configured to:
control the second bridge arm (B) in a first half cycle of a control cycle, to cause the first battery (1) to charge and the second battery (2) to discharge;
control the second bridge arm (B) in a second half cycle of the control cycle, to cause the first battery (1) to discharge and the second battery (2) to charge.

11. The apparatus according to any one of claims 7 to 10, further comprising:
a DC charging port (8);
a switching circuit (9), a first end of the switching circuit (9) being connected to a positive electrode of the DC charging port (8), and a second end of the switching circuit (9) being selectively connected to the positive electrode of the first battery (1) and the positive electrode of the second battery (2); and
a switching device (S1), a first end of the switching device (S1) being connected to each phase of first inductor (4), and a second end of the switching device (S1) being connected to the positive electrode of the first battery (1).

12. The apparatus according to claim 11, wherein
the controller (5) is separately connected to the switching circuit (9) and the switching device (S1), and the controller (5) is further configured to: in a first mode, control the switching circuit (9) to be connected to the positive electrode of the first battery (1) and control the switching device (S1) to be off to charge the first battery (1), and control the second bridge arm (B) to supply power to the second battery (2).

13. The apparatus according to claim 11, wherein
the controller (5) is separately connected to the switching circuit (9) and the switching device (S1), and the controller (5) is further configured to: in a second mode, control the switching circuit (9) to be connected to the positive electrode of the second battery (2) and control the switching device (S1) to be off to charge the second battery (2), and control the second bridge arm (B) to supply power to the first battery (1).

14. The apparatus according to claim 1, wherein
the first battery (1) is an energy type battery, the second battery (2) is a power type battery, and the charging and discharging rate of the power type battery is greater than the charging and discharging rate of the energy type battery.

15. The apparatus according to claim 7 or 8, wherein
the controller (5) is further configured to: control a motor controller to store braking feedback energy in the second battery (2); and/or, control the motor controller and the second bridge arm (B) to store braking feedback energy in the first battery (1).

16. A vehicle, comprising: the energy processing apparatus according to any one of claims 1 to 15.
